# EUROPÄISCHE PATENTSCHRIFT

(11) **EP 0 866 756 B1**
(45) Veröffentlichungstag und Bekanntmachung des Hinweises auf die Patenterteilung: **27.06.2001**
(21) Anmeldenummer: 96946190.4
(22) Anmeldetag: 11.12.1996
(51) Int. Cl.: B60R 21/32, B60R 16/02

(54) **ANORDNUNG ZUM AUSLÖSEN EINES RÜCKHALTEMITTELS IN EINEM KRAFTFAHRZEUG**
ARRANGEMENT FOR TRIGGERING A RESTRAINT DEVICE IN A MOTOR VEHICLE
SYSTEME POUR DECLENCHER UN ELEMENT DE RETENUE DANS UNE AUTOMOBILE

(30) Priorität: 12.12.1995 DE 29519696 U; 05.06.1996 DE 19622685
(43) Veröffentlichungstag der Anmeldung: 30.09.1998
(73) Patentinhaber: SIEMENS AKTIENGESELLSCHAFT, 80333 München (DE); FRAUNHOFER-GESELLSCHAFT ZUR FÖRDERUNG DER ANGEWANDTEN FORSCHUNG E.V., 80636 München (DE)
(72) Erfinder: SWART, Marten, D-93083 Obertraubling (DE); MADER, Gerhard, D-93107 Thalmassing (DE); ANTHOFER, Anton, D-92271 Freihung (DE); MAYER, Frank, D-91080 Erlangen (DE); SEITZER, Dieter, D-91054 Erlangen (DE)
(74) Vertreter: Zedlitz, Peter, Dipl.-Inf.
(86) Internationale Anmeldenummer: DE9602395
(87) Internationale Veröffentlichungsnummer: WO9721565

(56) Entgegenhaltungen:
- EP-A- 0 471 871
- EP-A- 0 557 561
- EP-A- 0 594 234
- EP-A- 0 679 554
- WO-A-95/30263
- WO-A-96/38323
- DE-C- 3 831 335
- US-A- 4 463 340
- US-A- 4 621 170

## Beschreibung

Die Erfindung betrifft eine Anordnung zum Auslösen eines Rückhaltemittels in einem Kraftfahrzeug gemäß Oberbegriff von Patentanspruch 1.

Eine solche Anordnung (EP 0 471 871 B1) weist eine Auswerteeinrichtung auf, in der ein von einer Sensoreinrichtung zur Unfallerkennung geliefertes Signal ausgewertet wird. Mehrere räumlich über das Fahrzeug verteilte Zündeinrichtungen sind über eine Leitung/einen Bus mit der Auswerteeinrichtung elektrisch verbunden. Die Auswerteeinrichtung liefert Nachrichten enthaltende Wechselsignale an eine Zündeinrichtung, die in einer Logikschaltung der Zündeinrichtung ausgewertet werden. Jede Zündeinrichtung ist mit einem Zündelement eines Rückhaltemittel elektrisch verbunden. Ferner wird vorgeschlagen, die zum Betreiben der Zündeinrichtungen notwendigen Energie über die Leitung an die Zündeinrichtungen zu liefern.

Eine bekannte und allseits gebräuchliche Datenübertragungstechnik ist die (Amplituden-, Phasen- oder Frequenz-) Modulation eines hochfrequenten Trägersignals mit einem Code-Signal. Die Anwendung einer solchen Datenübertragung bei der bekannten Anordnung zum Auslösen eines Rückhaltemittels ist jedoch von Nachteil, da durch das modulierte Trägersignal eine ausreichende Menge an Energie zum Betreiben der Zündeinrichtung geliefert werden muß, eine konstante Energieversorgung infolge der Datenabhängigkeit der übertragenen Energie aber nicht gewährleistet werden kann.

Ferner ist bei einer solchen Datenübertragung die maximal übertragbare Datenrate durch die Frequenz des Trägersignals begrenzt. Da jedoch u.a. Auslösebefehle zum Auslösen des Rückhaltemittels übertragen werden, ist für eine rechtzeitige Auslösung des Rückhaltemittels (Airbag, Gurtstraffer, u.ä.) eine äußerst kurze Datenübertragungszeit und damit eine sehr hohe Datenrate erforderlich. Eine hohe Datenrate bedingt jedoch eine hohe Trägerfrequenz. Je höher aber die Trägerfrequenz gewählt wird, desto stärker ist die Störabstrahlung von der Leitung. Die nachteilige Auswirkung einer starken Störabstrahlung auf elektrische Schaltungen ist hinlänglich bekannt. Dieser Effekt wird dadurch verstärkt, daß mit dem modulierten Trägersignal auch ein erhebliches Maß an Energie zum Betreiben der Zündeinrichtung übertragen wird.

Aufgabe der vorliegenden Erfindung ist es deshalb, die bekannte Anordnung derart weiterzuentwickeln, daß über die Leitung eine Energie- und Datenübertragung zur Zündeinrichtung ermöglicht wird, die eine hohe Datenrate erlaubt und gleichzeitig die Störabstrahlung auf die sicherheitskritische Anordnung niedrig hält.

Die Erfindung wird gelöst durch die Merkmale des Patentanspruchs 1.

Über die Leitung wird ein statisches Gleichsignal an die Zündeinrichtung geliefert, deren Logikschaltung mit dem Gleichsignal betrieben wird. Eine Nachricht in Form eines Wechselsignals wird von der Auswerteeinrichtung über dieselbe Leitung an die Zündeinrichtung übermittelt und dabei dem Gleichsignal additiv überlagert. Zur Auskopplung des Wechsel- und Gleichsignals aus dem an die Zündeinrichtung übermittelten Gesamtsignal enthält die Zündeinrichtung eine Filterschaltung. Mit. dem abgeleiteten Gleichsignal wird die das Wechselsignal auswertende Logikschaltung betrieben.

Bei der erfindungsgemäßen Signalübertragung ist die Datenübertragungsrate unabhängig von einer Grenzfrequenz eines Trägersignals. Damit kann ein Auslösebefehl äußerst schnell von der Auswerteeinrichtung an die Zündeinrichtung übermittelt werden. Aufgrund der geringen Amplitude des Wechselsignals im Vergleich zur Amplitude des Gleichsignals ist die Störabstrahlung auch bei hohen Frequenzen im Wechselsignal vernachlässigbar. Ferner wird durch die erfindungsgemäße Signalübertragung eine gleichmäßige und dauerhafte Energieübertragung während der Betriebsdauer der Anordnung gewährleistet.

Gemäß der Erfindung enthält die Zündeinrichtung eine Gleichrichterschaltung, über die das Gleichsignal der Logikschaltung zugeführt wird. Gleichzeitig weisen unterschiedliche Zeichen im Wechselsignal gleiche Frequenz aber unterschiedliche Phasenlage auf: Die räumlich über das Fahrzeug verteilten Zündeinrichtungen sind über einen Kabelbaum mit der Auswerteeinrichtung elektrisch verbunden. Dabei ist der Kabelbaum über je einen Steckverbinder mit der Auswerteeinrichtung und den Zündeinrichtungen mechanisch verbunden. Bei der Montage kann ein solcher Steckverbinder aus Unachtsamkeit falsch herum zusammengesteckt werden, was eine entgegengesetzte elektrische Polung für Bauelemente der Zündeinrichtung und deren Zerstörung zur Folge hat. Bekannte, aber in der Regel aufwendige "Verpolschutz"-Schaltungen in Steuergeräten verhindern eine Zerstörung des Steuergeräts aufgrund einer solchen unsachgemäß gesteckten Steckverbindung.

Durch die erfindungsgemäße Signalübertragung zur Zündeinrichtung zusammen mit der Zündeinrichtung durch die Gleichrichterschaltung sowie der Anwendung des sog. Diphase-Verfahrens als Codierungsverfahren für die Übertragung des Wechselsignals wird die Zündeinrichtung bei unsachgemäßem Zusammenstecken von Steckverbindern im Auslösepfad nicht nur vor Zerstörung bewahrt: Es bleibt sogar die Funktionstüchtigkeit der Zündeinrichtung voll erhalten, so daß beim Zusammenbau der erfindungsgemäßen Anordnung nicht mehr auf die Polung bei den Steckverbindungen geachtet werden muß. Die Gleichrichterschaltung gewährleistet die Energieversorgung der Zündeinrichtung in jedem Fall mit einem richtig gepolten Gleichspannungsignal. Durch die Anwendung des vorgenannten Codierungsverfahrens zur Datenübertragung für das Wechselsignal bleibt die im Wechselsignal enthaltene Nachricht für die Zündeinrichtung auch dann voll erhalten, wenn eine verkehrt gepolte Steckverbindung vorliegt: Das vorgeschlagene Codierungsverfahren besitzt die Eigenschaft, daß die Information im Wechselsignal nicht in High/Low (1/0)-Pegeln liegt, sondern in Polaritätsänderungen, also in der Phasenlage der einzelnen übertragenen Zeichen. Vorzugsweise ist der Zeichenvorrat binär, wobei die Zeichen Null und Eins gegeneinander um 180° phasenverschoben sind.

Zum anderen weist aufgrund der Ausbildung der Codierungsvorschrift jedes Wechselsignal einen Mittelwert von Null auf, so daß die übertragene Energie allein vom Gleichsignal auf der Leitung abhängt. Würde das Wechselsignal einen Mittelwert aufweisen, hätte dies eine zeitlich schwankende Energieübertragung zur Folge. Durch die Erfindung ist aber eine erfindungsgemäße, gleichmäßige Energieübertragung gewährleistet, so daß alle Bauelemente der Zündeinrichtung und insbesondere das Zündelement und der Zündkondensator größere Bauelementtoleranzen aufweisen können. Ferner kann infolge des vorgeschlagenen Codierungsverfahrens die der Logikschaltung zugrundeliegende Taktfrequenz durch die Zündeinrichtung in einfacher Weise aus dem übertragenen Wechselsignal abgeleitet werden. Damit wird zusätzlicher Schaltungsaufwand in der Zündeinrichtung zur Taktrückgewinnung überflüssig.

Weitere vorteilhafte Weiterbildungen der Erfindung sind in den übrigen Unteransprüchen gekennzeichnet.

Die Erfindung und ihre Weiterbildungen werden anhand der Zeichnung näher erläutert. Es zeigen:
- Figur 1:: Ein Blockschaltbild der erfindungsgemäßen Anordnung,
- Figur 2:: Eine Signaleinkopplung auf die Leitung seitens der Auswerteeinrichtung,
- Figur 3:: Ein beispielhaftes Signal auf der Leitung zwischen Auswerteeinrichtung und Zündeinrichtung,
- Figur 4:: Eine Signalauskopplung in der Zündeinrichtung,
- Figur 5:: Ein Schaltbild der erfindungsgemäßen Zündeinrichtung
- Figur 6:: Eine räumlich über das Fahrzeug verteilte erfindungsgemäße Anordnung
- Figur 7:: Ein Blockschaltbild von zwei an die Leitung angekoppelten Zündeinrichtungen, und
- Figur 8:: Das Coded-Diphase-Verfahren anhand einer beispielhaften Nachricht.

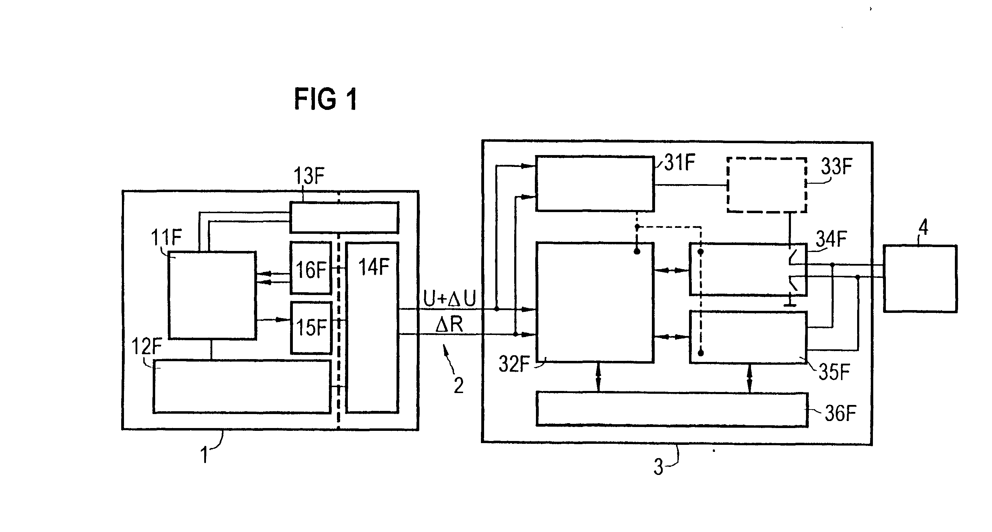

Gleiche Elemente sind figurenübergreifend mit gleichen Bezugszeichen gekennzeichnet. Einigen Bezugszeichen in den Figuren 1, 2, 4 und 7 ist ein F nachgestellt: Bei Elementen, mit einem solchen Bezugszeichen handelt es sich überwiegend um Funktionsblöcke in Blockschaltbildern im Unterschied zu Bauteilen/Bauelementen von Schaltungen. Aufgrund einer nicht immer möglichen eindeutigen Zuordnung von Bauteilen/Bauelementen zu Funktionsblöcken wurde auf eine hierarchische Gliederung von Bezugszeichen von vorneherein verzichtet.

In Figur 1 ist eine Auswerteeinrichtung 1 gezeigt, die über eine Leitung 2 mit einer Zündeinrichtung 3 elektrisch verbunden ist. Die Auswerteeinrichtung 1 enthält eine Recheneinheit 11F, eine Diagnoseeinheit 13F eine Busankopplungseinheit 14F, eine Empfangseinheit 16F, eine Sendeeinheit 15F und eine Energieversorgungseinheit 12F. Die Zündeinrichtung 3 enthält ein bidirektionales Kommunikationsinterface 32F, ein Energiemanagement 31F, eine Energiereserve 33F, einen Auslöser 34F, eine Diagnoseeinheit 35F, sowie einen nichtflüchtigen Speicher 36F. Die Zündeinrichtung 3 ist elektrisch leitend mit einem Zündelement 4 verbunden.

Die Energieversorgung 12F versorgt die Recheneinheit 11F sowie sämtliche weitere Funktionsblöcke der Auswerteeinrichtung 1 mit Energie. In der Recheneinheit 11F wird ein von einer nicht gezeigten Sensoreinrichtung zur Aufprallerkennung geliefertes Signal ausgewertet. Zumindest die Recheneinheit 11F wird durch die Diagnoseeinheit 13F auf Funktionsfähigkeit überprüft.

Die Auswerteeinrichtung 1 liefert Nachrichten in Form von codierten Wechselsignalen ΔU über die Leitung 2 an die Zündeinrichtung 3. Eine Nachricht kann beispielsweise einen codierten Auslösebefehl enthalten, der die Zündeinrichtung 3 veranlaßt, das Zündelement 4 zu zünden. Eine Nachricht kann des weiteren enthalten: Meßwerte, wenn z.B. die endgültige Auslöseentscheidung vor der Zündeinrichtung 3 selbst getroffen wird, Zustandsinformationen der Auswerteeinrichtung 1 oder auch Kommandos für die Zündeinrichtung 3, auf die hin durch die Diagnoseeinheit 35F Zustandsdaten der Zündeinrichtung 3 ermittelt werden, die daraufhin über die Leitung 2 von der Zündeinrichtung 3 an die Auswerteeinrichtung 1 übermittelt und in der Auswerteeinrichtung 1 verwertet werden. Die Blöcke 16F und 15F der Auswerteeinrichtung 1 kennzeichnen das Senden und Empfangen von Nachrichten in Form von Code-Wechselsignalen. Die Verwertung und Zusammenstellung von Daten findet in der Recheneinheit 11F statt, die damit nicht nur Auswerteroutinen durchführt sondern auch als bidirektionales Kommunikationsinterface für höhere Schichten im Kommunikationsablauf mit der Zündeinrichtung 3 dient. Die Funktionsblöcke 14F, 15F, 16F in Figur 1 kennzeichnen in diesem Ausführungsbeispiel die hardwarenahen Schichten der Datenübertragung seitens der Auswerteeinrichtung 1.

Von der Energieversorgung 12F wird ein Gleichsignal U auf die Leitung 2 eingekoppelt. Die Einkopplung des Gleichsignals U durch die Auswerteeinrichtung 1 ist insofern vorteilhaft, da die Auswerteeinrichtung 1 ohnehin eine Stromversorgung aufweist. Das Gleichsignal U kann gleichsam abseits der Auswerteeinrichtung 1 auf die Leitung 2 eingekoppelt werden.

Vor der Einkopplung des Gleichsignals U auf die Leitung 2 kann das Gleichsignal U schaltungstechnisch stabilisiert und auf den gewünschten Wert geregelt werden.

Das Wechselsignal ΔU ist in jedem Fall dem Gleichsignal U additiv überlagert. Das Gesamtsignal U,U+ΔU liegt als Spannung zwischen den beiden Leitern 21 und 22 der Leitung 2 an. Dabei liegt das Gleichsignal U während der gesamten Betriebsdauer der Anordnung - also während die Anordnung aktiviert ist - an der Leitung 2 an.

Seitens der Zündeinrichtung 3 übernimmt das bidirektionale Kommunikationsinterface 32F die Ableitung des Wechselsignals ΔU aus dem Gesamtsignal U, U+ΔU sowie seine Decodierung, Verarbeitung, und ggf die Umsetzung von Anweisungen in Steuersignale.

Durch die Funktion Energiemanagement 31F wird das Gleichsignal U aus dem Gesamtsignal U,U+ΔU zur Energieversorgung der diversen Schaltungskomponenten, insbesondere des bidirektionalen Kommunikationsinterfaces 32F ausgekoppelt. Über die Funktion Energiemanagement 31F wird ferner eine Energiereserve 33F betrieben, die die zum Zünden des Zündelements 4 notwendige Energie bereitstellen soll. Durch diese Energiereserve 33F kann ferner das bidirektionale Kommunikationsinterface 32F für zumindest eine kurze Zeitspanne auch dann betrieben werden, wenn die Energieübertragung über die Leitung 2 unterbrochen ist.

Das bidirektionale Kommunikationsinterface 32F steuert bei Erkennen eines korrekt übertragenen Auslösebefehls den Auslöser 34F an, so daß eine Energie von der Energiereserve 33F an das Zündelement 4 übertragen wird. Ferner kann die Diagnoseeinheit 35F durch das bidirektionale Kommunikationsinterface 32F veranlaßt werden, Bestandteile und Bauelemente der Zündeinrichtung 3 auf ihre Funktionstüchtigkeit hin zu überprüfen bzw Messungen durchzuführen. Die Diagnose-, Auswerte-, und Codierungs/Decodierungsvorschriften sind in dem nichtflüchtigen Speicher 36F abgelegt.

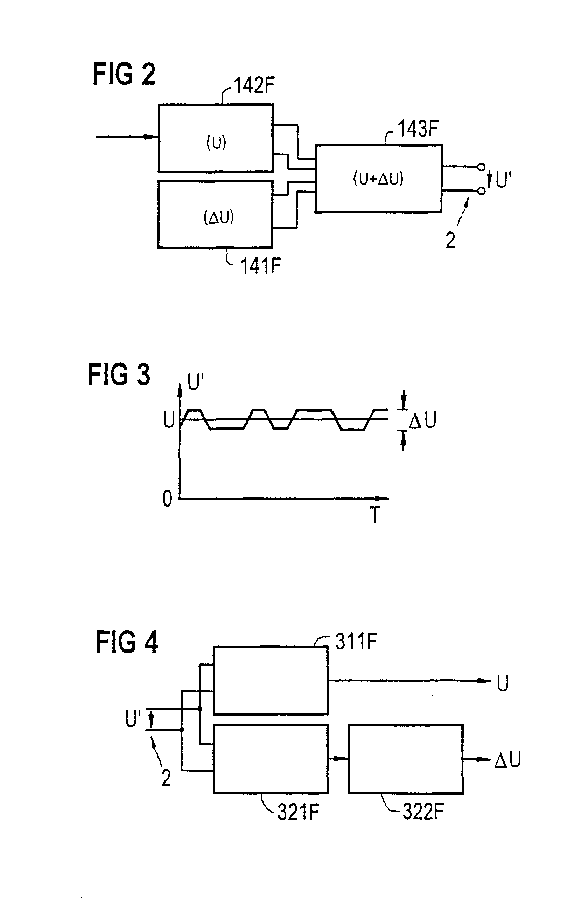

Figur 2 zeigt ein Blockschaltbild der Einkopplung von Signalanteilen ΔU,U auf die Leitung 2. Nachrichten werden als Wechselsignale ΔU dem permanent übertragenen Gleichsignal U additiv überlagert 143F.

Figur 3 zeigt ein beispielhaftes Gesamtsignal U'= U+ΔU auf der Leitung 2. Liegen keine Übertragungswünsche seitens der Auswerteeinrichtung 1 oder der Zündeinrichtung 3 vor, liegt lediglich das Gleichsignal U auf der Leitung 2 vor. Der Hub des Wechselsignals ΔU ist im Vergleich zum Hub des Gleichsignals U gering ausgebildet, um eine große Störabstrahlung zu vermeiden. So ist der Hub des Wechselsignals ΔU vorzugsweise kleiner 20 Prozent des Gleichsignalhubs U, insbesondere kleiner 10 Prozent.

Figur 4 zeigt ein Blockschaltbild der Auskopplung des Gleichssignals U und des Wechselsignals ΔU aus dem auf der Leitung übertragenen Gesamtsignal U'= U bzw U+ΔU. Dabei wird das Gleichsignal U im Funktionsblock Energieauskopplung 311F ausgekoppelt. Seperat davon werden die Daten im Funktionsblock Datenauskopplung 321F ausgekoppelt und daraufhin verstärkt und decodiert in 322F.

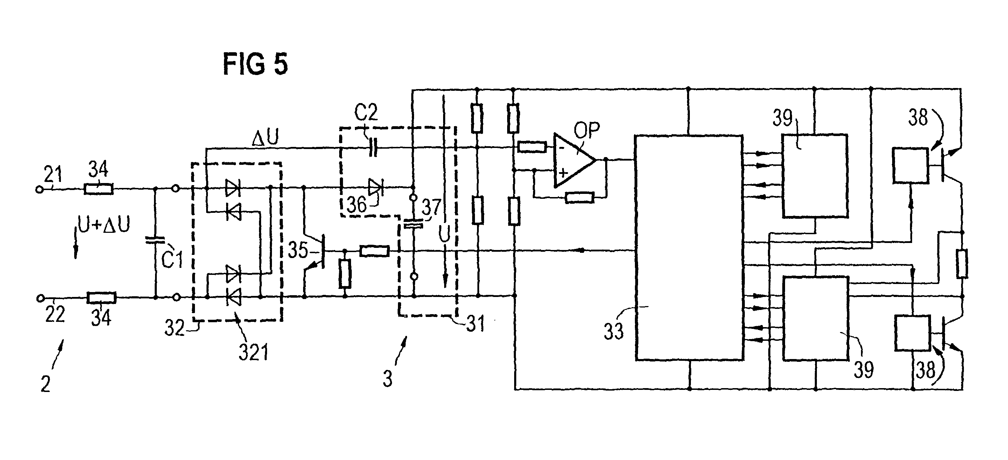

Figur 5 zeigt ein Schaltbild einer erfindungsgemäßen Zündeinrichtung 3. Dabei ist in der Zündeinrichtung 3 zu jedem Leiter 21, 22 der Leitung 2 ein Entkopplungswiderstand 34 in Serie angeordnet. Die Entkopplungswiderstände 34 sind über einen Kondensator C1 miteinander verbunden. Die Entkopplungswiderstände 34 sind ferner mit den Eingängen einer als Brükkengleichrichter 321 ausgebildeten Gleichrichterschaltung 32 verbunden, deren Ausgänge wiederum über ein steuerbares Schaltmittel 35 miteinander verbunden sind. Des weiteren ist ein Ausgang der Gleichrichterschaltung 32 über eine Entkopplungsdiode 36, der andere Ausgang der Gleichrichterschaltung 32 direkt mit einem Zündkondensator 37 verbunden. Die Anschlüsse des Zündkondensators 37 sind mit einer Logikschaltung 33, mit zwei Diagnoseeinrichtungen 39, und über je ein weiteres steuerbares Schaltmittel 38 mit dem Zündelement 4 verbunden. Ein Entkopplungswiderstand 34 ist zudem über einen Kondensator C2 und einen Operationsverstärker mit der Logikschaltung 33 verbunden.

Die Entkopplungswiderstände 34 verhindern, daß durch einen beispielsweise durch das Zünden des Zündelements 4 verursachten Kurzschluß in der Zündeinrichtung 3 das gesamte Bussystem (Leitung 2) kurzgeschlossen und damit ein zeitlich späteres Zünden von weiteren - bis dato nicht gezündeten - Zündelementen nicht mehr möglich ist. Ferner verhindern die Entkopplungswiderstände 34 einen Stromfluß von der Zündeinrichtung 3 über die Leitung 2 beim Zünden des Zündelements 4 aus dem Zündkondensator 37.

Zum anderen bildet der Entkopplungswiderstand 34 zusammen mit dem Kondensator C1 einen Tiefpaß, der hochfrequente Störanteile im übertragenen Gesamtsignal U,U+ΔU - nicht aber die Nachrichten enthaltenden Frequenzen des Wechselsignals ΔU - herausfiltert. An den Anschlüssen des Kondensators C1 liegt also nach wie vor im wesentlichen das Gesamtsignal U, U+ΔU an. Das Gesamtsignal U,U+ΔU wird im folgenden durch den Brükkengleichrichter 321 gleichgerichtet. Somit liegt auch bei verkehrter Polung am Eingang der Zündeinrichtung 3 immer ein korrekt gepoltes Gesamtsignal U,U+ΔU an auf den Brükkengleichrichter 321 folgenden Schaltungsteilen der Zündeinrichtung 3 an.

Die Entkopplungsdiode 36 wirkt als frequenzabhängiger Widerstand mit dem Energiespeicherkondensator 37 als Tiefpaß zusammen. Anstelle einer solchen Entkopplungsdiode 36 kann jeder andere frequenzabhängige Widerstand verwendet werden. Auch der Entkopplungswiderstand 34 ist maßgebend für die Filtereigenschaften des Tiefpaßfilters. Das Tiefpaßfilter dient ferner als EMV-Schutz gegen Einkopplung von hochfrequenter Strahlung auf die Zündeinrichtung 3.

An den Anschlüssen des Zündkondensators 37 liegt das aus dem Gesamtsignal U,U+ΔU ausgekoppelte Gleichsignal U mit richtiger Polung an, so daß der Zündkondensator aufgeladen wird. Des weiteren werden mit dem Gleichsignal U die Logikschaltung 33 und die Diagnoseeinrichtungen 39 betrieben.

Nach dem Entkopplungswiderstand 34 wird das Gesamtsignal U,U+ΔU abgegriffen und einem Hochpaß in Form eines. Kondensators C2 zugeführt, dessen Ausgang das Wechselsignal ΔU liefert, das über den Operationsverstärker OP in ein Rechtecksignal gewandelt wird. Damit steht der Logikschaltung 33 das Wechselsignal ΔU zur Verfügung. Kondensator C2, Entkopplungsdiode 36 und Zündkondensator 37 bilden somit eine Filterschaltung 31 zur Auskopplung einerseits des Wechselsignals ΔU, andererseits des Gleichsignals U aus dem Gesamtsignal U,U+ΔU, wobei auch die Entkopplungswiderstände 34 für das Tiefpaßverhalten mitverantwortlich sind.

In der Logikschaltung 33 werden die Nachrichten enthaltende Wechselsignale ΔU decodiert: und ausgewertet. Ggf. werden Berechnungen angestellt, Messungen vorgenommen, oder auch die weiteren Schaltmittel 38 zum Zünden des Zündelements 4 angesteuert.

Sollen Nachrichten von der Zündeinrichtung 3 an die Auswerteeinrichtung 1 übermittelt werden, so wird das steuerbare Schaltmittel 35 durch die Logikschaltung 33 angesteuert. Über das steuerbare Schaltmittel 35 werden die beiden Leiter 21 und 22 der Leitung 2 über die Entkopplungswiderstände 34 kurzgeschlossen, so daß über die beiden Leiter 21,22, die Entkopplungswiderstände 34 sowie das steuerbare Schaltmittel 35 Strom fließt. Dieser Stromfluß wird in der Auswerteeinrichtung 1 erkannt und ausgewertet. Zur Übertragung einer aus mehreren Zeichen bestehenden Nachricht wird demzufolge das steuerbare Schaltmittel 35 durch die Logikschaltung 33 im Sinne eines Bitmusters angesteuert. Diese Strommodulation zur Rückübertragung von Daten ist bei der erfindungsgemäßen Anordnung insbesondere vorteilhaft, da lediglich das steuerbare Schaltmittel 35 durch die Logikschaltung 33 betätigt wird: Bei diesem Rückübertragungsverfahren wird der Zündeinrichtung 3 keine Energie entzogen. Die Energieübertragung von der Auswerteeinrichtung 1 zur Zündeinrichtung 3 wird statt dessen unterbrochen. Zusätzliche Energie für die Rückübertragung ist damit nicht notwendig. Dieser Vorteil ist insofern wesentlich, da die Energie von der Auswerteeinrichtung 1 zur Zündeinrichtung 3 übertragen wird und nicht in beliebigem Maße in der Zündeinrichtung 3 zur Verfügung steht. Voraussetzung für die erfindungsgemäß ausgebildete Rückübertragung von Signalen ist das Anliegen des Gleichsignals U an der Leitung.

Über den Kondensator C2 können Rücksignale ΔR nochmals von der Logikschaltung 33 gelesen und überprüft werden. So wird ein von der Logikschaltung 33 gelesenes und für nicht korrekt befundenes Rücksignal ΔR nochmals übermittelt.

Die Entkopplungsdiode 36 dient neben ihrer Verwendung zur Tiefpaß-Filterung bei einer Nachrichtenrückübertragung von der Zündeinrichtung 3 zur Auswerteeinrichtung 1 - wenn also die Leitung 2 über die Entkopplungswiderstände 34 kurzgeschlossen ist - zum Abtrennen der kurzgeschlossenen Leitung 2 von den restlichen Schaltungsteilen der Zündeinrichtung 3.

Durch die erfindungsgemäße Ausbildung der Hin- und Rückübertragung von Daten bzw Energie ist die Anordnung hinsichtlich ihrer Störabstrahlung, ihres Bauelementeaufwands und der Mehrfachausnützung von Bauelementen optimal ausgestaltet.

Das steuerbare Schaltmittel 35 ist zwischen der Gleichrichterschaltung 32 und der Logikschaltung 33 angeordnet, so daß auch bei einer falschen Polung am Eingang der Zündeinrichtung 3 die Kommunikation zwischen Auswerte- und Zündeinrichtung 1 bzw 3 nicht beeinträchtigt wird. Dabei wird eine Nachricht, die von der Zündeinrichtung 3 zur Auswerteeinrichtung 1 übertragen wird, ebenfalls derart codiert, daß unterschiedliche Zeichen gleiche Frequenz aber unterschiedliche Phasenlage aufweisen.

Die Diagnoseeinrichtungen 39 nehmen Messungen der an den weiteren steuerbaren Schaltmittel 38 anliegenden Zündspannung sowie des Zündelementwiderstands vor. Des weiteren wird die Funktionsfähigkeit der weiteren steuerbaren Schaltmittel 38 überprüft sowie Leckwiderstände im Zündkreis (Schaltstrecke über die weiteren steuerbaren Schaltmittel 38 und das Zündelement 4) gemessen. Die Meßergebnisse werden an die Auswerteeinrichtung 1 übertragen, können aber auch in der Logikschaltung 33 selbst verarbeitet oder zumindest vorverarbeitet werden. Die Logikschaltung 33 ihrerseits kann durch die Auswerteschaltung 1 auf Funktionsfähigkeit überprüft werden.

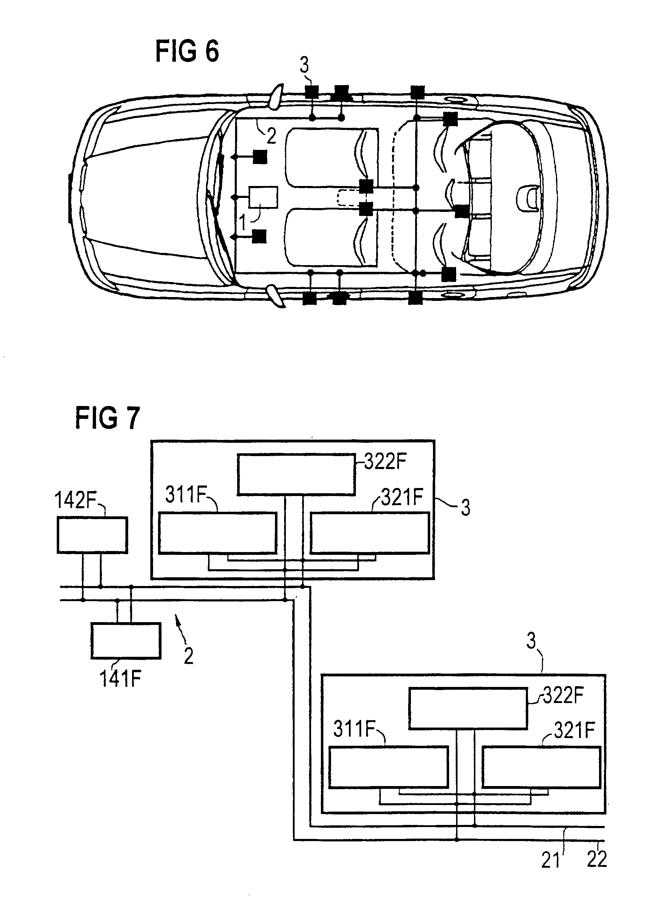

Figur 6 zeigt die erfindungsgemäße Anordnung mit ihren über das Kraftfahrzeug räumlich verteilten Komponenten Zündeinrichtungen 3 und Auswerteeinrichtung 1. Die Leitung 2 ist dabei als Bussystem abgebildet.

In Figur 7 ist eine Anordnung gemäß Figur 6 als Blockschaltbild dargestellt. Jede Zündeinrichtung 3 enthält die Funktionsblöcke Energieauskopplung 311F, Datenauskopplung 323F und Dateneinkopplung 322F. An einer räumlich von den Zündeinrichtungen 3 getrennten Stelle im Kraftfahrzeug werden andererseits Daten eingekoppelt 142F bzw. Energie eingekoppelt 141F. Vorzugsweise sind diese Funktionsblöcke in der Auswerteeinrichtung 1 umgesetzt.

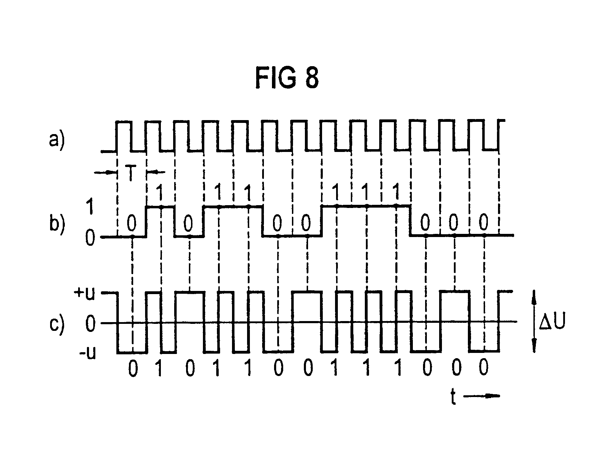

In Figur 8 ist das sog. Coded-Diphase-Verfahren anhand einer zu übertragenden Nachricht aus einzelnen Zeichen erläutert. Figur 8a zeigt die Taktfrequenz, mit der eine Nachricht gemäß Figur 8b übertragen werden soll. Figur 8c zeigt das Format, in dem die Nachricht letztendlich übertragen wird, wobei die Zeichen 0/1 gemäß Figur 8b durch das Coded-Diphase-Verfahren in Zeichen 0/1 gemäß Figur 8c umgesetzt werden. Übertragene Nullen und Einsen weisen gleiche Frequenz auf, sind jedoch zueinander um 180° phasenverschoben. Soll beispielsweise das Zeichen Null übertragen werden, so wird es mit der zum vorhergehenden übertragenen Zeichen mit entgegengesetzter Phasenlage ausgesendet: So tritt während einer Null kein Polaritätswechsel auf. Eine Eins enthält jedoch einen Polaritätswechsel.

Eine solche Codierungsvorschrift hat die Eigenschaft, daß bei einem Vertauschen der Polarität - in Figur 8c wird also beispielsweise +U mit -U vertauscht - die Nachricht und damit die Information nicht verloren geht, da im übertragenen Signal die Polaritätswechsel maßgebend sind und nicht die Polarität/Amplitude der Zeichen. Derartige Codierungsverfahren sind auch unter den Namen Bi-Phase-Code oder Manchester-Code bekannt.

## Patentansprüche

1. Anordnung zum Auslösen eines Rückhaltemittels in einem Kraftfahrzeug,
mit einer Auswerteeinrichtung (1) zur Auswertung eines von einer Sensoreinrichtung zur Unfallerkennung gelieferten Aufprallsignals,
mit einer Zündeinrichtung (3), die räumlich getrennt von der Auswerteeinrichtung (1) im Kraftfahrzeug angeordnet und über eine Leitung (2) mit der Auswerteeinrichtung (1) elektrisch verbunden ist, zur übertragung eines eine Nachricht enthaltenden Wechselsignals (ΔU) von der Auswerteeinrichtung (1) zur Zündeinrichtung (3) und zur Auswertung der Nachricht in einer Logikschaltung (33) der Zündeinrichtung (3),
mit einem Zündelement (4) des Rückhaltemittels, das mit der Zündeinrichtung (3) elektrisch verbunden ist, und
mit einem Zündkondensator (37) in der Zündeinrichtung (3), der Energie zum Zünden des Zündelements (4) bereitstellt,
wobei ein Gleichsignal (U) zum Betreiben der Logikschaltung (33) auf die Leitung (2) eingekoppelt ist, und die Übertragung des Wechselsignals (ΔU) additiv zum Gleichsignal (U) erfolgt,
**dadurch gekennzeichnet,**
daß die Leitung (2) als Zwei-Draht-Leitung (21,22) ausgebildet ist,
daß die Zündeinrichtung (3) aufweist:
eine Filterschaltung (31) zur Ableitung des Gleichsignals (U) und des Wechselsignals (ΔU) aus dem übertragenen Gesamtsignal (U, U+ΔU),
eine Gleichrichterschaltung (32),
einen hochohmigen Entkopplungswiderstand (34) in Serie zur Leitung (2),
ein durch die Logikschaltung (33) steuerbares und zwischen Gleichrichterschaltung (32) und Logikschaltung (33) angeordnetes Schaltmittel (35), durch das die zwei Leiter (21,22) der Leitung (2) über zumindest den Entkopplungswiderstand (34) zur Übermittlung von Nachrichten an die Auswerteeinrichtung (1) kurzschließbar sind.

2. Anordnung nach Anspruch 1, dadurch gekennzeichnet, daß über die Gleichrichterschaltung (32) das Gleichsignal (U) der Logikschaltung (33) zugeführt wird, und daß unterschiedliche Zeichen im Wechselsignal (ΔU) gleiche Frequenz aber unterschiedliche Phasenlage aufweisen.

3. Anordnung nach Anspruch 2, dadurch gekennzeichnet, daß die Gleichrichterschaltung (32) einen Brückengleichrichter (321) enthält.

4. Anordnung nach Anspruch 3, dadurch gekennzeichnet, daß die Zündschaltung (3) eine Entkopplungsdiode (36) zwischen steuerbarem Schaltmittel (35) und Logikschaltung (33) aufweist.

5. Anordnung nach Anspruch 4, dadurch gekennzeichnet, daß die Übermittlung der Nachrichten durch den durch die wechselweise Ansteuerung des Schaltmittels (35) in der Leitung (2) hervorgerufenen Stromfluß über den Entkopplungswiderstand (34) im Form eines Rücksignals (ΔR) von der Zündeinrichtung (3) an die Auswerteeinrichtung (1) erfolgt, wobei unterschiedliche Zeichen im Rücksignal (ΔR) gleiche Frequenz aber unterschiedliche Phasenlage aufweisen.

6. Anordnung nach Anspruch 1, dadurch gekennzeichnet, daß das Wechselsignal (ΔU) zwei unterschiedliche Zeichen (0/1) aufweist, die um 180 Grad zueinander phasenverschoben sind.

## Claims

1. An arrangement for triggering a restraint device in a motor vehicle, having an evaluation device (1) for evaluation of an impact signal supplied by a sensor device for detecting accidents,
having an ignition device (3) which is arranged spatially separated from the evaluation device (1) in the motor vehicle and is electrically connected to the evaluation device (1) via a line (2), for transmission of an alternating signal (ΔU) containing a message from the evaluation device (1) to the ignition device (3) and for evaluation of the message in a logic circuit (33) of the ignition device (3),
having an ignition element (4) of the restraint device, which element (4) is electrically connected to the ignition device (3), and
having an ignition capacitor (37) in the ignition device (3), which capacitor (37) makes available power for firing the ignition element (4), characterised in that the line (2) is arranged as a two-wire line (21,22), whereby a d.c. signal (U) for operating the logic circuit (33) is input into the line (2), and the transmission of the alternating signal (ΔU) takes place additively to the d.c. signal (U), and
in that the ignition device (3) has:
a filter circuit (31) for derivation of the d.c. signal (U) and of the alternating signal (ΔU) from the transmitted composite signal (U, U+(ΔU);
a rectifier circuit (32);
a high-impedance isolating resistor (34) which is arranged in series with the line (2);
a switching means (35) which can be controlled by the logic circuit (33) and is arranged between the rectifier circuit (32) and the logic circuit (33), by which switching means (35) the two conductors (21, 22) of the line (2) can be shortcircuited by means of at least the isolating resistor (34) in order to transmit messages to the evaluation device (1).

2. The arrangement as claimed in claim 1, characterised in that the d.c. signal (U) is fed to the logic circuit (33) via the rectifier circuit (32), and in that different characters in the alternating signal (ΔU) have the same frequency but different phase relation.

3. The arrangement as claimed in claim 2, characterised in that the rectifier circuit (32) contains a bridge rectifier (321).

4. The arrangement as claimed in claim 3, characterised in that the ignition circuit (3) has an isolating diode (36) between the controllable switching means (35) and the logic circuit (33).

5. The arrangement as claimed in claim 4, characterised in that the transmission of the messages is brought about by flow of current via the isolating resistor (34) by means of the alternating actuation of the switching means (35) in the line (2) in the form of a return signal (ΔR) from the ignition device (3) to the evaluation device (1), different characters in the return signal (ΔR) having identical frequencies but different phase relation.

6. The arrangement as claimed in claim 1, characterised in that the alternating signal (ΔU) has two different characters (0/1) which are phase-shifted by 180 degrees with respect to one another.

## Revendications

1. Agencement permettant de déclencher un moyen de retenue dans un véhicule automobile, comprenant
un dispositif d'analyse (1), servant à analyser un signal de collision délivré par un dispositif de détection servant à la constatation d'accident,
un dispositif d'amorçage (3), qui est disposé dans le véhicule automobile en étant séparé dans l'espace du dispositif d'analyse (1) et est relié électriquement au dispositif d'analyse (1) par une ligne (2), en vue de la transmission d'un signal alternatif (ΔU) contenant un message, du dispositif d'analyse (1) au dispositif d'amorçage (3), et en vue de l'analyse du message dans un circuit logique (33) du dispositif d'amorçage (3),
un élément d'amorçage (4) du moyen de retenue, qui est relié électriquement au dispositif d'amorçage (3), et
un condensateur d'amorçage (37) qui est situé dans le dispositif d'amorçage (3) et qui met de l'énergie à disposition en vue de l'amorçage de l'élément d'amorçage (4),
tandis qu'un signal continu (U) servant à la mise en service du circuit logique (33) est couplé sur la ligne (2) et que la transmission du signal alternatif (ΔU) s'effectue d'une manière additive vis-à-vis du signal continu (U),
caractérisé
en ce que la ligne (2) est réalisée sous forme d'une ligne à deux fils (21, 22), et
en ce que le dispositif d'amorçage (3) comprend :
un circuit de filtre (31) servant à extraire du signal total transmis (U, U + ΔU) le signal continu (U) et le signal alternatif (ΔU),
un circuit redresseur (32),
une résistance de découplage (34) à valeur ohmique élevée, montée en série vis-à-vis de la ligne (2), et
un moyen de commutation (35) qui peut être commandé au moyen du circuit logique (33) et est disposé entre le circuit redresseur (32) et le circuit logique (33) et au moyen duquel les deux conducteurs (21, 22) de la ligne (2) peuvent être mis en court-circuit au moins par la résistance de découplage (34) en vue de la transmission de messages au dispositif d'analyse (1) .

2. Agencement suivant la revendication 1,
caractérisé en ce que le signal continu (U) est envoyé au circuit logique (33) en traversant le circuit redresseur (32) et en ce que des caractères différents présents dans le signal alternatif (ΔU) ont des fréquences égales, mais des relations de phase différentes.

3. Agencement suivant la revendication 2,
caractérisé en ce que le circuit redresseur (32) contient un redresseur en pont (321).

4. Agencement suivant la revendication 3,
caractérisé en ce que le circuit d'amorçage (3) comporte une diode de découplage (36) entre le moyen de commutation (35) pouvant être commandé et le circuit logique (33).

5. Agencement suivant la revendication 4,
caractérisé en ce que la transmission des messages a lieu du dispositif d'amorçage (3) au dispositif d'analyse (1), sous forme d'un signal en retour (ΔR) , au moyen du courant qui est créé par la commande alternée du moyen de commutation (35) dans la ligne (2) et qui traverse la résistance de découplage (34), des caractères différents présents dans le signal de retour (ΔR) ayant des fréquences égales, mais des relations de phase différentes.

6. Agencement suivant la revendication 1,
caractérisé en ce que le signal alternatif (U) comporte deux caractères différents (0/1) qui sont déphasés de 180° l'un vis-à-vis de l'autre.
